# EUROPÄISCHE PATENTSCHRIFT

(11) **EP 2 004 448 B1**
(45) Veröffentlichungstag und Bekanntmachung des Hinweises auf die Patenterteilung: **18.08.2010**
(21) Anmeldenummer: 06819006.5
(22) Anmeldetag: 08.12.2006
(51) Int. Cl.: B60N 2/12, B60N 2/08, B60N 2/433

(54) **VERSTELLSYSTEM FÜR EINEN FAHRZEUGSITZ**
ADJUSTING SYSTEM FOR A VEHICLE SEAT
SYSTEME DE DEPLACEMENT D'UN SIEGE DE VEHICULE

(30) Priorität: 30.03.2006 DE 202006005103 U
(43) Veröffentlichungstag der Anmeldung: 24.12.2008
(73) Patentinhaber: Brose Fahrzeugteile GmbH & Co. Kommanditgesellschaft, Coburg, 96450 Coburg (DE)
(72) Erfinder: QUAST, Ingo, 96450 Coburg (DE)
(74) Vertreter: Tergau & Pohl Patentanwälte
(86) Internationale Anmeldenummer: PCT/EP2006/011804
(87) Internationale Veröffentlichungsnummer: WO 2007/118505

(56) Entgegenhaltungen:
- EP-A2- 1 046 536
- DE-U1-202004 011 388

## Beschreibung

Die Erfindung betrifft ein Verstellsystem für einen Fahrzeugsitz gemäß dem Oberbegriff von Anspruch 1.

Ein derartiges Verstellsystem ist aus der DE 20 2004 011 388 U1 bekannt und umfasst eine fahrzeugfest montierbare Unterschiene sowie eine an den Fahrzeugsitz montierbare Oberschiene, die entlang der Unterschiene verfahrbar ist. Durch die Verfahrbarkeit der Oberschiene entlang der Unterschiene wird eine Verstellung des mit der Oberschiene verbundenen Fahrzeugsitzes in Schienenlängsrichtung ermöglicht. Das Verstellsystem weist weiter eine wechselweise sitz- oder fahrzeugfeste Memory-Baugruppe auf, die einen beweglichen Sperr-Riegel zur Ausbildung eines Formgesperres mit der Unterschiene und Mittel zur Ausbildung eines Formgesperres mit einem sitzfesten, beweglichen Steuerhebel umfasst, wobei der Sperr-Riegel durch den sitzfesten Steuerhebel betätigbar ist.

Die Memory-Baugruppe dient einer mechanischen Speicherung einer eingestellten Sitzlängsposition, wenn der Fahrzeugsitz vorübergehend längsverstellt werden muss. Eine derartige vorübergehende Längsverstellung eines Fahrzeugsitzes ist beispielsweise in zweitürigen Personenkraftwagen oder in Kleinbussen notwendig, um für einen Fahrgast im Fahrzeugfond den Ein- oder Ausstieg zu erleichtern.

Zur Speicherung der eingestellten Sitzlängsposition ist der bewegliche, sitzfeste Steuerhebel mit einer Betätigungsmechanik zum vorübergehenden Längsverschieben des Fahrzeugsitzes, wie einer Ein- oder Ausstiegsmechanik gekoppelt. Wird der Fahrzeugsitz zum Ein- oder Ausstieg längsverschoben, so gerät der Steuerhebel aus seiner Riegel- oder Rastposition, die er mit der Memory-Baugruppe bildet, wodurch die Memory-Baugruppe vom Fahrzeugsitz entkoppelt wird. Gleichzeitig wird der Sperr-Riegel der Memory-Baugruppe zur Ausbildung eines Formgesperres mit der Unterschiene betätigt. Mit anderen Worten wird bei einer vorübergehenden Längsverschiebung des Fahrzeugsitzes die Memory-Baugruppe auf der Unterschiene ortsfest abgelegt. Über die Ablageposition der Memory-Baugruppe auf der Unterschiene ist die voreingestellte Sitzlängsposition gespeichert. Als die Ablage der Memory-Baugruppe auslösende Betätigungsmechanik wird gemäß der DE 20 2004 011 388 U1 die Mechanik zum Umklappen der Rückenlehne des Fahrzeugsitzes verwendet.

Wird der Fahrzeugsitz nach Ablage der Memory-Baugruppe wieder zurückgeschoben, so bildet der Steuerhebel durch entsprechende Formgebung an der abgelegten Position wiederum ein Formgesperre mit der Memory-Baugruppe und entriegelt das Formgesperre zwischen dem Sperr-Riegel und der Unterschiene. Der Fahrzeugsitz hat seine ursprüngliche Position wieder erreicht.

Gemäß der DE 20 2004 011 388 U1 ist der Sperr-Riegel der Memory-Baugruppe als ein Drehriegel ausgebildet, der bei entsprechender Betätigung mit Ausnehmungen der Unterschiene ein Formgesperre ausbildet. Hierzu greift der Sperr-Riegel entweder mittels Sperrnasen in die Ausnehmungen der Unterschiene ein oder nimmt die zwischen den Ausnehmungen liegenden Stege der Unterschiene in einer entsprechend ausgestalteten Einbuchtung auf.

Ein gattungsgemäßes Verstellsystem ist aus der EP-A-1046536 bekannt.

Es ist Aufgabe der Erfindung, ein Verstellsystem der eingangs genannten Art weiter zu verbessern.

Diese Aufgabe wird für ein Verstellsystem gemäß dem Oberbegriff von Anspruch 1 erfindungsgemäß dadurch gelöst, dass der Sperr-Riegel in der Memory-Baugruppe kurvengesteuert in einem Wälzlager drehbeweglich gelagert ist, wobei das Wälzlager durch einen mit einer offenen Fläche kraftschlüssig gepaarten Lagerzapfen gebildet ist.

Unter einem Formgesperre wird vorliegend ein Funktionselement oder eine Baugruppe verstanden, welches bzw. welche vorübergehend das Entstehen einer Bewegung eines Körpers verhindert. Die Sperrung kann dabei durch eine Verriegelung und/oder durch eine Verrastung hergestellt werden. Das Formgesperre braucht insbesondere hinsichtlich der Bewegungsrichtung nicht symmetrisch ausgestaltet zu sein. So kann der Sperr-Riegel der Memory-Baugruppe beispielsweise so ausgestaltet sein, dass das mit der Unterschiene ausgebildete Formgesperre eine hohe Sperrwirkung gegenüber dem auflaufenden Fahrzeugsitz aufweist, jedoch nur eine geringe Sperrwirkung in der entgegengesetzten Richtung besitzt.

Das Wälzlager ist als ein offenes Lager ausgebildet, worunter ein solches Lager verstanden wird, in welchem der Lagerpunkt oder die Lagerachse nicht fixiert ist, so dass der Lagerpunkt oder die Lagerachse während der Bewegung wandern kann. Die Lagerung geschieht durch Kraftschluss. Mit anderen Worten weist ein offenes Lager einen translatorischen Freiheitsgrad des Lagerpunktes oder der Lagerachse auf.

Die Erfindung geht in einem ersten Schritt von der Überlegung aus, dass die Memory-Baugruppe für eine mechanische Ansteuerung des sitzfesten Steuerhebels insbesondere bei der Wiederaufnahme durch den zurückfahrenden Fahrzeugsitz eine starken Lösungskräften standhaltende Sperrung mit der Unterschiene aufweisen muss. Dies wird bislang durch entsprechend ausgestaltete Anschlagflächen des drehbeweglichen Sperr-Riegels gelöst, die sich bei Sperrung an den Stegen der Unterschiene abstützen. Die Sperrung des aus Sperr-Riegel und Unterschiene gebildeten Formgesperres kann jedoch weiter verbessert werden, wenn die Eindringtiefe des Sperr-Riegels oder dessen Anpresskraft an die Unterschiene verstärkt wird. Dies könnte mit einer veränderten Hebelauslegung des Sperr-Riegels erzielt werden. Ein längerer Hebelarm des Sperr-Riegels ist jedoch mit einem größeren Bauvolumen verbunden, was sowohl hinsichtlich der Materialkosten als auch hinsichtlich der in Kraftfahrzeugen gegebenen engen Bauraumverhältnissen zu vermeiden ist.

In einem zweiten Schritt geht die Erfindung von der Überlegung aus, dass sich eine Verstärkung der Sperrung des Formgesperres zwischen Sperr-Riegel und Unterschiene ohne Bauraumvergrößerung erzielen lässt, wenn eine Wanderung der Drehachse oder des Drehpols des Sperr-Riegels während der Bewegung des Sperr-Riegels zugelassen wird. Hierdurch kann nämlich bei einem vorgegebenen Spen-Riegel Einfluss auf seine Hebelwirkung des Sperr-Riegels und somit auf die Sperrung während seines Bewegungsablaufs genommen werden. Dies kann aber durch ein offenes Lager bewirkt werden, welches während der Drehbewegung des Sperr-Riegels eine translatorische Bewegung des Lagerelements zulässt.

In einem dritten Schritt schließlich erkennt die Erfindung, dass ein offenes Lager aufgrund der vielen Freiheitsgrade zu unbestimmt für den gewünschten Bewegungsablauf des Sperr-Riegels zwischen einer Sperr- und einer Löseposition ist. Die Freiheitsgrade des offenen Lagers können jedoch durch Einführung einer weiteren Zwangsbedingung zur Gestaltung eines gewünschten Bewegungsablaufs des Sperr-Riegels genutzt werden. Diese weitere Zwangsbedingung ist dadurch realisiert, dass das offene Lager kurvengesteuert ist. Durch eine kurvengesteuerte Zwangsführung der Bewegung des Sperr-Riegels in dem offenen Lager gelingt es, den Bewegungsablauf des Sperr-Riegels bezüglich der gewünschten Erfordernisse, insbesondere zur Erhöhung der Halte- oder Öffnungskraft des Formgesperres, anzupassen.

Die Kurvensteuerung kann durch eine Kulissenführung oder durch eine Zwangsanlenkung geschehen. In einer vorteilhaften Ausgestaltung wird jedoch zur Kurvensteuerung ein Lager eingesetzt. Das Lager kann dabei insbesondere durch ein Lagerelement wie einer Walze, einer Rolle, einem Steg oder einer Kugel ausgebildet sein, an dem der Sperr-Riegel während seines Bewegungsablaufs zwangsgeführt abrollt oder abgleitet. Insbesondere ist eine Ausgestaltung des Lagers als ein Wälz- oder als ein Gleitlager möglich. In einer einfachen und kostengünstigen Variante wird das Lager jedoch durch einen Rundsteg repräsentiert, entlang dem der Sperr-Riegel mit einer Laufkante, insbesondere mit seiner Außenkante gleitet oder abrollt bzw. läuft. Dabei ist es insbesondere nicht erforderlich, dass der Rundsteg drehbar gelagert ist. Es ist auch vorstellbar, dass die Laufkante des Sperr-Riegels sich abstützend an dem Rundsteg vorbeigleitet. Durch die Ausgestaltung der Laufkante kann der gewünschte Bewegungsablauf des Sperr-Riegels eingestellt werden, insbesondere hinsichtlich des Wandems des Drehpoles zu einer Verstärkung der Haltekraft des Sperr-Riegels.

Das offene Lager ist als ein Wälz- oder Pendellager ausgebildet, in welchem sich ein Lagerzapfen auf einer Pfanne offen abrollt und/oder dieser offen entlang gleitet. Bei einem derartigen Wälz- oder Pendellager ist der Zapfen zur Ausführung von Pendelbewegungen kraftschlüssig mit der Pfanne gepaart, wobei der Auflagepunkt des Zapfens in der Pfanne während der Bewegung wandert. Ein solches Lager ist mechanisch relativ einfach ausgebildet und daher kostengünstig zu realisieren. Zudem lässt es hinsichtlich der Ausgestaltung des Zapfens und der Pfanne zusätzliche Gestaltungsfreiheiten zur Ausbildung des gewünschten Bewegungsablaufs.

In einer vorteilhaften Ausgestaltung ist der Sperr-Riegel zwischen dem kurvensteuemden Lager- und einem Wälzlager geführt. Dabei ist der Sperr-Riegel auf der einen Seite in einer entsprechenden Ausnehmung des Wälzlagers innerhalb gewisser Grenzen pendelbar sowie verschiebbar geführt, wobei sich die gegenüberliegende Seite des Spen-Riegels an dem Lager abrollt. Durch das Zusammenwirken mit einem Federelement, welches auf den Sperr-Riegel zum Zwecke der Auslösung der Bewegung und des Erzeugens der nötigen Haltekraft einwirkt, gelingt es auf diese Weise mit kostengünstigen Mitteln einen zwangsgeführten Bewegungsablauf des Sperr-Riegels zu erzeugen, wie er zur Verbesserung der Haltekraft in der Sperrposition erforderlich ist. Für das Wälzlager ist es hierbei insbesondere vorteilhaft, wenn der Sperr-Riegel mittels eines angeformten Zahnes in einer entsprechenden Rundausnehmung zur Ausbildung des Wiegelagers gelagert ist.

Hinsichtlich einer verbesserten Hebelwirkung des Sperr-Riegel in der Sperrposition des Sperr-Riegels ist es zweckmäßig, wenn die mit dem entsprechenden Zahn des Sperr-Riegels das Wälzlager bildende Rundausnehmung der Unterschiene abgewandt ist. Somit ist der in der Rundausnehmung gelagerte Zahn des Sperr-Riegels zur Unterschiene hin ausgerichtet. Dabei bildet das eine freie Ende des zwischen dem Gegenlager und dem Wälzlager gelagerten Sperr-Riegels in einer Sperrposition das Formgesperre mit der Unterschiene, wobei das andere Ende des Sperr-Riegels an ein vorgespanntes Federelement grenzt. Bei einer Betätigung des Sperr-Riegels von seiner Ruheposition in seine Sperrposition kann es auf diese Weise mit einer entsprechend gestalteten Laufkante leicht bewirkt werden, dass sich der durch im Zusammenspiel zwischen Gegen- und Wälzlager gebildete Drehpol des Sperr-Riegels entweder vom durch Federkraft getriebenen Ende entfernt oder eine Verlängerung des in die Unterschiene eingreifenden Sperrteils entsteht. In ersterem Fall entsteht eine Verstärkung der Kraftwirkung des Sperr-Riegels gegenüber der Unterschiene. Im zweiten Fall wird die Eindringtiefe des Sperr-Riegels in die Unterschiene erhöht.

Vorteilhafterweise ist die Rundausnehmung im Wesentlichen U- oder V-förmig ausgebildet. Für eine kostengünstige Ausgestaltung ist es vorteilhaft, den Sperr-Riegel derart auszugestalten, dass bei einem Anschlag durch den zurückfahrenden Fahrzeugsitz die einwirkenden Kräfte auf die mit der Unterschiene korrespondierenden Anschlagflächen abgeleitet werden. In diesem Fall sind sowohl das offene Wälzlager als auch das kurvensteuemde Lager relativ gering kräftebelastet. Dies erlaubt es, sowohl die Rundausnehmung des Wälzlagers als auch den stützenden Rundsteg beispielsweise aus Kunststoff zu fertigen.

In einer weiteren zweckmäßigen Ausgestaltung weist die Unterschiene durch Stege voneinander getrennte Öffnungen auf, in welche der Sperr-Riegel in einer ersten Sperrposition eingreift. Diese Ausgestaltung bietet sich deshalb an, weil die Unterschiene zur Führung eines Fahrzeugsitzes in aller Regel bereits entsprechende Öffnungen aufweist, über welche die Oberschiene mittels eines Riegelelements zur Fixierung einer eingestellten Sitzlängsposition verriegelbar ist. Auf diese Weise kann die Unterschiene ohne zusätzliche Konstruktionsteile sowohl zum Verriegeln der Oberschiene als auch zur Sperrung für die Memory-Baugruppe verwendet werden. Selbstverständlich ist es auch vorstellbar, die Unterschiene separat für eine Sperrung mit dem Sperr-Riegel auszubilden.

Weiter vorteilhaft ist es, wenn der Sperr-Riegel eine zwischen Sperrnasen angeordnete Einbuchtung aufweist, die in einer zweiten Sperrposition einen Steg der Unterschiene umgreift. Somit kann der Sperr-Riegel in einer ersten Sperrposition als ein Riegelelement zu einer Sperrung mit der Unterschiene führen und zusätzlich mit der Einbuchtung in der zweiten Sperrposition mit einem Steg der Unterschiene, durch welchen die Öffnungen der Unterschiene jeweils voneinander getrennt sind, nach Art einer Verrastung sperren. In Längsrichtung der Unterschiene ist somit eine Ablage der Memory-Baugruppe nach Art eines Riegelgesperres an den jeweiligen Öffnungen und nach Art eines Rastgesperres an den jeweils die Öffnungen trennenden Stege möglich. Somit werden zwischen den Öffnungen der Unterschiene zusätzliche Ablagepositionen der Memory-Baugruppe geschaffen, wodurch sich die Auflösung hinsichtlich der gespeicherten Sitzlängsposition erhöht.

Weiter von Vorteil ist es, wenn die Laufkante des Sperr-Riegels eine erste Ausnehmung zur Abstützung gegenüber dem Rundsteg in einer Löseposition und eine durch einen Wulst von der ersten Ausnehmung beabstandete, zweite Ausnehmung zur Abstützung gegenüber dem Rundsteg in der ersten Sperrposition aufweist. Auf diese Weise wird eine bistabile Lagerung des Sperr-Riegels zwischen dem offenen Lager bzw. Wälzlager und dem Rundsteg des Gegenlagers geschaffen. Zum Wechsel zwischen den beiden Positionen ist ein gewisser Energieaufwand notwendig, da der zwischen den Ausnehmungen angeordnete Wulst unter Aufbringung einer Gegenkraft überwunden werden muss. Bei der Ablage der Memory-Baugruppe auf der Unterschiene wird der Wulst mittels der auf den Sperr-Riegel wirkenden Federkraft überwunden. Beim Auflaufen des zurückfahrenden Fahrzeugsitzes verhindert der zwischen den Ausnehmungen liegende Wulst ein Verdrehen des Spen-Riegels hin zur Löseposition, so dass die Memory-Baugruppe besser gegen ein ungewolltes Verfahren gegenüber der Unterschiene in einer Sperrposition des Sperr-Riegels geschützt ist.

Die Memory-Baugruppe umfasst Mittel zur Ausbildung eines Formgesperres mit dem sitzfesten Steuerhebel. Diese Mittel sind erforderlich, damit die Memory-Baugruppe in einer Löseposition des Sperr-Riegels gemeinsam mit dem Fahrzeugsitz in Schienenlängsrichtung verfahren werden kann. Vorteilhafterweise weist die Memory-Baugruppe als Mittel zur Ausbildung eines Formgesperres mit dem Steuerhebel eine Ausnehmung zur Aufnahme zumindest eines Teils des Steuerhebels auf. Eine aufwändige Ausgestaltung des Formgesperres zwischen der Memory-Baugruppe und dem Steuerhebel ist nicht erforderlich, da die Memory-Baugruppe in der Löseposition des Sperr-Riegels leicht entlang der Unterschiene verfahren werden kann. Insofern genügt eine Ausnehmung, in welche zumindest ein Teil des Steuerhebels aufgenommen ist, um eine ausreichende Kopplung zwischen der Memory-Baugruppe und dem Fahrzeugsitz herzustellen. Zusätzlich kann die Mitnahme der Memory-Baugruppe durch eine Anschlagfläche oder ein Anschlagelement der Oberschiene bewerkstelligt sein, so dass bei einem Zurücklaufen des Fahrzeugsitzes gegen die Memory-Baugruppe letztere von der Oberschiene angeschoben wird.

Zum Auslösen bzw. Betätigen des Steuerhebels, der mit einer Betätigungsmechanik im Fahrzeugsitz verbunden ist, weist die Memory-Baugruppe vorteilhafterweise eine erste Steuerrampe auf, entlang welcher der Steuerhebel führbar ist. Die Steuerrampe kann dabei sowohl als eine Kante oder als eine Fläche ausgestaltet sein. Insbesondere ist es sinnvoll, die Ausnehmung als Teil der ersten Steuerrampe auszubilden, so dass der Steuerhebel in einem Bewegungsablauf beim Auffahren auf die Steuerrampe betätigt wird und bei Erreichen der Ausnehmung als Formgesperre mit der Memory-Baugruppe zusammenwirkt.

In einer besonders vorteilhaften Ausgestaltung ist die Ausnehmung insbesondere als Teil der ersten Steuerrampe derart ausgebildet, dass der Steuerhebel bei Erreichen der Ausnehmung zu einer lösenden Betätigung des Sperr-Riegels führt. In diesem Fall wirkt der in die Ausnehmung einlaufende Steuerhebel gegen den beweglichen Sperr-Riegel derart, dass sein mit der Unterschiene ein Formgesperre bildendes Ende aus der Verrastung oder der Verriegelung heraus bewegt wird. Der Steuerhebel wirkt dabei insbesondere gegen eine den Sperr-Riegel betätigende Federkraft.

Eine kompakte und kostengünstige Bauform lässt sich erzielen, wenn der Sperr-Riegel in einer durch eine erste und durch eine zweite Wandfläche gebildeten, taschenförmigen Aufnahme geführt ist, wobei der Rundsteg die erste und die zweite Wandfläche verbindend gelagert ist, wobei die Rundausnehmung des Wälzlagers zwischen der ersten und der zweiten Wandfläche angeordnet ist, und wobei die erste Steuerrampe durch die Oberkante einer Wandfläche gebildet ist.

Das Verstellsystem ist nicht eingeschränkt auf die Verwendung für einen Fahrzeugsitz, dessen Rückenlehne gegen die Sitzfläche klappbar ist. Es ist genausogut vorstellbar, zum Erleichtern des Ein- oder Ausstiegs den Fahrzeugsitz mit einer feststehenden Rückenlehne zu verfahren, wobei zum Ablegen der Memory-Baugruppe eine derartige vorübergehende Sitzlängsverstellung von einer gewöhnlichen Einstellung der Sitzlängsposition unterschieden werden muss. Dies kann beispielsweise mittels eines entsprechenden Betätigungselementes geschehen.

Derzeit ist es jedoch üblich, zum Zwecke des Ein- oder Ausstiegs eine verstellbare Rückenlehne des Fahrzeugsitzes zur Sitzfläche hin zu klappen, womit als solches bereits eine Vergrößerung des Bewegungsfreiraumes für einen Fahrgast geschaffen wird. Eine Sitzlängsverstellung zum Zwecke der Einstellung einer Komfortposition beispielsweise des Fahrers ist hierbei von der Klappbewegung der Rückenlehne deutlich unterschieden. Somit lässt sich die Auslösung des Klappmechanismus der Rückenlehne als Wunsch zum Ein- oder Ausstieg interpretieren, während die reguläre Betätigung der Sitzlängsverstellung als Einstellung einer Komfortposition gewertet wird.

Bei der auch als "Easy-Entry" bekannten Ausführungsform zum Erleichtern des Ein- oder Ausstiegs in einem zweitürigen Kraftfahrzeug, wie insbesondere einem Coupé, ist diese Erkenntnis dadurch genutzt, dass mit Betätigung des Umklappmechanismus der Rückenlehne die den Fahrzeugsitz tragende Oberschiene von der Unterschiene entsperrt, der Sitz insgesamt somit längsverschiebbar und bei der Längsverschiebung die Memory-Baugruppe auf der Unterschiene abgelegt wird. Dabei ist insbesondere der ein Formgesperre mit der Memory-Baugruppe ausbildende Steuerhebel mit der Betätigungsmechanik zum Umklappen der Rückenlehne gekoppelt.

Für eine leichte Bedienbarkeit und zum Vermeiden eines Rückklappens der umgeklappten Rückenlehne in den Ein- oder Ausstiegsraum hinein weist ein für eine "Easy-Entry"-Funktion ausgestatteter Fahrzeugsitz in der Regel ein Gesperre zwischen der Rückenlehne und der Sitzfläche im eingeklappten Zustand auf. Mit anderen Worten wird die Rückenlehne im eingeklappten Zustand gegenüber der Sitzfläche festgehalten. Hierzu ist es vorteilhaft, wenn die Memory-Baugruppe eine zweite Steuerrampe zur Führung eines sitzfesten, beweglichen Komforthebels aufweist, die derart ausgebildet ist, dass der Komforthebel beim Auflaufen auf die zweite Steuerrampe eine Arretierung der Rückenlehne in einem vorgeklappten Zustand löst. Hierzu ist der Komforthebel mit dem die Arretierung von Rückenlehne und Sitzfläche bewirkenden Gesperre zu koppeln. Diese Funktion bietet den Vorteil, dass der vorgestellte Fahrzeugsitz in einem einzigen Bewegungsablauf wieder an die gespeicherte Sitzlängsposition zurückverfahren und im Schwung der Bewegung die umgeklappte Rückenlehne dabei aufgerichtet werden kann.

Vorteilhafterweise ist die zweite Steuerrampe der die erste Steuerrampe bildenden Wandfläche angeformt oder angelehnt. Diese Ausgestaltung führt zu einer kleinen und kostengünstigen Bauform, insbesondere da hierbei der Komforthebel und der Steuerhebel nebeneinander auf einer gemeinsamen Achse angeordnet sein können.

Da das Auffahren des Steuerhebels auf die Steuerrampe ein die Sperrung des Sperr-Riegels mit der Unterschiene lösendes Drehmoment der Memory-Baugruppe bewirkt, ist es vorteilhaft, wenn die zweite Steuerrampe durch die Oberkante einer beweglichen Wippe gebildet ist, die mittels eines ersten Drehgelenks der Memory-Baugruppe ortsfest angelenkt ist, und die mit ihrem freien Ende über ein zweites Drehgelenk mit dem beweglichen Sperr-Riegel verbunden ist. Auf diese Weise bewirkt der auflaufende Komforthebel eine gegen die Unterschiene gerichtete Bewegung der Wippe, so dass in Folge der mit dem freien Ende der Wippe verbundene Sperr-Riegel die Haltekraft verstärkend gegen die Unterschiene gepresst wird. Hierdurch wird ein unerwünschtes Verschieben der Memory-Baugruppe aus ihrer abgelegten und versperrten Position heraus durch den auflaufenden Fahrzeugsitz sicher vermieden.

Vorteilhafterweise ist das zweite Drehgelenk an einem flachen Ende der Wippe mit ansteigender zweiter Steuerrampe angeordnet. Durch diese Ausgestaltung wird eine günstige Kraftübertragung von dem gegen die Steuerrampe drückenden Komforthebel auf den Sperr-Riegel bewirkt.

Schließlich ist in einer zweckmäßigen Ausgestaltung die Wippe einer Wandfläche mittels des ersten Drehgelenks drehbar angelehnt, wobei die Wippe über das zweite Drehgelenk durch eine kreisbogenförmige Öffnung in der Wandfläche mit dem Sperr-Riegel verbunden ist. Hierdurch wird eine besonders kompakte Bauform der Memory-Baugruppe erzielt. Zwischen der Wippe und dem Sperr-Riegel sind keine aufwändigen Kopplungselemente erforderlich. Der Steuerhebel, der beispielsweise mit dem Klappmechanismus der Rückenlehne des Fahrzeugsitzes verbunden ist, und der Komforthebel, der die Arretierung zwischen vorgeklappter Rückenlehne und Sitzfläche bei Auflaufen auf die zweite Steuerrampe löst, können zudem nebeneinander sowohl Kosten als auch Raum sparend auf einer gemeinsamen Achse beweglich angeordnet werden. Die erste Steuerrampe wird durch die Oberkante einer Wandung der Memory-Baugruppe gebildet, an welcher die Wippe drehbar angelehnt ist, deren Oberkante die zweite Steuerrampe bildet.

Ausführungsbeispiele der Erfindung werden anhand einer Zeichnung näher erläutert. Dabei zeigen:
- Fig. 1A: in einer halb transparenten Darstellung eine Memory-Baugruppe in einer sitzfesten Position, angekoppelt an einen Steuerhebel,
- Fig. 1B: in einer halb transparenten Darstellung die Memory-Baugruppe gemäß Fig. 1A in einer fahrzeugfesten Position mit verriegeltem Sperr-Riegel,
- Fig. 2A: in einer halb transparenten Darstellung die Memory-Baugruppe gemäß Fig. 1A in einer fahrzeugfesten Position mit verrastetem Sperr-Riegel un- mittelbar vor Aufnahme durch einen Fahrzeugsitz,
- Fig. 2B: in einer halb transparenten Darstellung die Memory-Baugruppe gemäß Fig. 1A in einer fahrzeugfesten Position mit verriegeltem Sperr-Riegel un- mittelbar vor Aufnahme durch den Fahrzeugsitz,
- Fig. 3A: in einer geöffneten Darstellung eine Memory-Baugruppe mit einem zwi- schen einem Wälz- und einem Gegenlager geführten Sperr-Riegel in einer Löseposition,
- Fig. 3B: in einer geöffneten Darstellung die Memory-Baugruppe gemäß Fig. 3A, wobei sich der Sperr-Riegel in einer ersten Sperrposition befindet,
- Fig. 3C: in einer geöffneten Darstellung die Memory-Baugruppe gemäß Fig. 3A, wobei sich der Sperr-Riegel in einer zweiten Sperrposition befindet,
- Fig. 4A: in einer perspektivischen Darstellung eine Memory-Baugruppe,
- Fig. 4B: in einer perspektivischen Darstellung die Memory-Baugruppe gemäß Fig. 4A aus einem anderen Blickwinkel,
- Fig. 5A: einen sitzfesten Haltewinkel mit einem Steuerhebel und einem Komfort- hebel in einer Position, in welcher der Steuerhebel und der Haltewinkel der Memory-Baugruppe aufgelaufen sind,
- Fig. 5B: den Haltewinkel gemäß Fig. 5A in einer Position vor Auflaufen auf die Memory-Baugruppe,
- Fig. 6A: in einer perspektivischen Darstellung eine weitere Memory-Baugruppe im Zusammenspiel mit einem Komfort- und einem Steuerhebel, wobei die Steuerrampe für den Komforthebel als eine bewegliche Wippe ausges- taltet ist,
- Fig. 6B: in perspektivischer Darstellung die Memory-Baugruppe gemäß Fig. 6A aus einer anderen Blickrichtung und
- Fig. 7: schematisch einen Fahrzeugsitz mit "Easy-Entry"-Funktion.

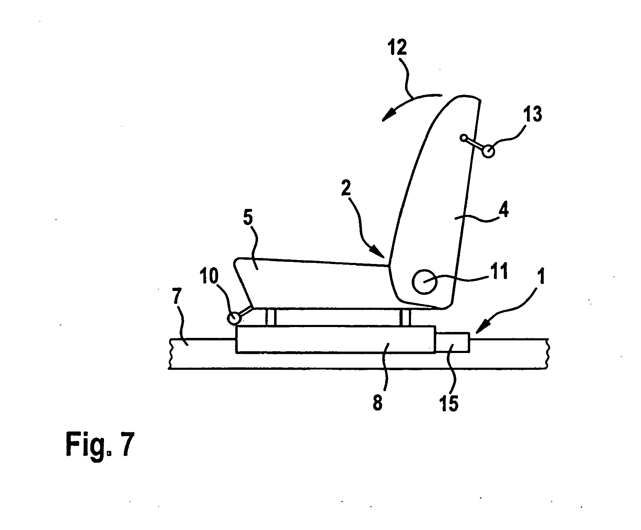

In Fig. 7 ist zur Verdeutlichung einer "Easy-Entry"-Funktion schematisch ein Verstellsystem 1 mit einem Fahrzeugsitz 2 dargestellt, der eine Rückenlehne 4 sowie ein Sitzunterteil 5 umfasst. Das Verstellsystem 1 ist gebildet aus einer fahrzeugfest montierten Unterschiene 7, entlang welcher eine Oberschiene 8 gleitet. Mittels eines - nicht sichtbaren - Gesperres kann die Oberschiene 8 und somit der Fahrzeugsitz 2 an verschiedenen Sitzlängspositionen mit der Unterschiene 7 verriegelt bzw. versperrt werden.

Zum Einstellen einer gewünschten Sitzlängsposition weist der Fahrzeugsitz 2 einen am Sitzunterteil 5 angeordneten Betätigungshebel 10 auf, der bei Betätigung zu einer Entsperrung des Gesperres zwischen Ober- und Unterschiene 8 bzw. 7 führt. Nach Entsperrung kann der Fahrzeugsitz 2 mit der Oberschiene 8 der Unterschiene 7 entlang an eine gewünschte Sitzlängsposition gefahren und dort durch Loslassen des Betätigungshebels 10 unter erneuter Sperrung der Oberschiene 8 an die Unterschiene 7 fixiert werden.

Die Rückenlehne 4 ist mittels einer Befestigungsachse 11 drehbeweglich mit dem Sitzunterteil 5 verbunden. Insbesondere ist die Rückenlehne 4 mittels der Befestigungsachse 11 in Richtung des Pfeils 12 gegen das Sitzunterteil 5 nach vorne umklappbar. Zur Auslösung der Betätigungsmechanik zum Umklappen der Rückenlehne 4 ist ein Betätigungshebel 13 vorgesehen.

Zum Speichern einer voreingestellten Sitzlängsposition ist der Oberschiene 8 weiter eine Memory-Baugruppe 15,15' zugeordnet, die bei einer regulären Sitzlängsverstellung gemeinsam mit der Oberschiene 8 sitzfest der Unterschiene 7 entlang gleitet. Zur Verwirklichung einer "Easy-Entry"-Funktion des Fahrzeugsitzes 2 ist die Rückenlehne 4 mechanisch sowohl mit dem die Verriegelung zwischen der Ober- und der Unterschiene 8 bzw. 7 bewirkenden Gesperre als auch mit einer Auslösemechanik zum Ablegen der Memory-Baugruppe 15 auf der Unterschiene 7 verbunden. Wird der Betätigungshebel 13 ausgelöst und in Folge die Rückenlehne 4 in Richtung des Pfeils 12 gegen das Sitzunterteil 5 nach vorne geklappt, so wird über die mechanische Kopplung, die beispielsweise mittels eines Bowdenzugs realisiert ist, die Versperrung zwischen der Oberschiene 8 und der Unterschiene 7 gelöst. Gleichzeitig wird die Auslösemechanik betätigt und die Memory-Baugruppe 15 in der voreingestellten Sitzlängsposition auf die Unterschiene 7 abgelegt. Die Ablegeposition der Memory-Baugruppe 15 wird durch ein Formgesperre gegenüber der Unterschiene 7 fixiert. Somit ist durch die Ablageposition der Memory-Baugruppe bei einem vorübergehenden Längsverschieben des Fahrzeugsitzes 2 insbesondere zum Zwecke des Ein- oder Ausstiegs die voreingestellte Komfortposition gespeichert

Wird anschließend der Fahrzeugsitz 2 wieder zurückgefahren, so wird durch entsprechend ausgestaltete Kopplungselemente an der voreingestellten Sitzlängsposition die Memory-Baugruppe 15 wieder durch den Fahrzeugsitz 2 aufgenommen, wobei die Oberschiene 8 an der ursprünglichen Position mit der Unterschiene 7 wieder verriegelt und die Rückenlehne 4 zurückgeklappt wird.

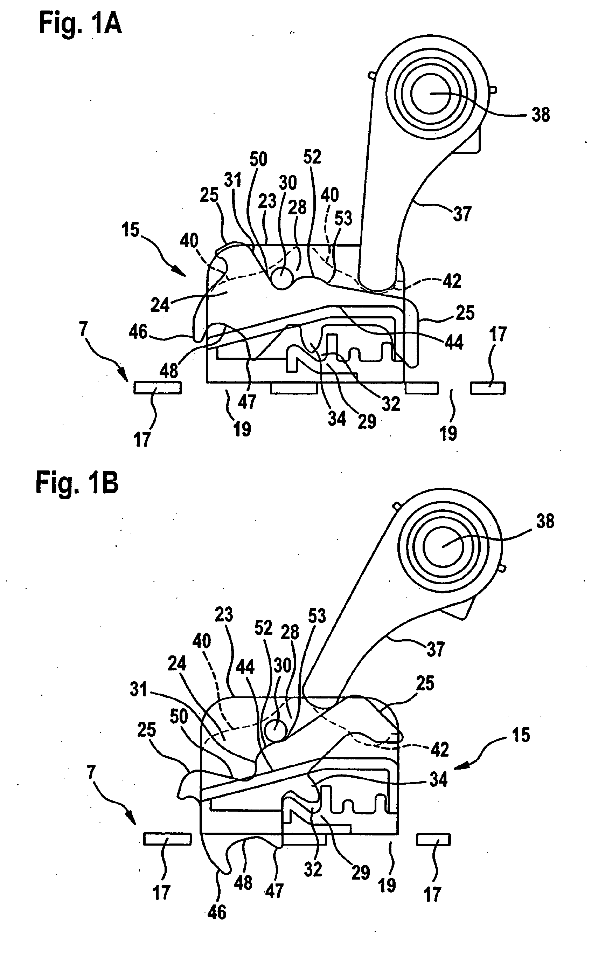

Die Wirkungsweise und die Ausgestaltung der Kopplungselemente, die den Auslösemechanismus zum Ablegen der Memory-Baugruppe 15 bilden, wird nun im Folgenden anhand der Fig. 1 bis 6 beschrieben.

Fig. 1A zeigt hierzu zunächst in einer halb transparenten Darstellung eine Memory-Baugruppe 15 in einer dem Fahrzeugsitz 2 gemäß Fig. 7 angekoppelten Position. Die Oberschiene 8 gemäß Fig. 7 ist in dieser Darstellung nicht sichtbar. Von der Unterschiene 7 sind im Querschnitt Stege 17 erkennbar, zwischen denen jeweils Öffnungen 19 eingebracht sind. Zur Versperrung der Oberschiene 8 mit der Unterschiene 7 greifen in diese Öffnungen 19 entsprechend ausgestaltete Riegelelemente ein. In der dargestellten sitzfesten Position kann die Memory-Baugruppe 15 leicht entlang der Unterschiene 7 gleiten.

Die Memory-Baugruppe 15 umfasst als wesentliche Elemente eine bezüglich der Blattebene hinten liegende erste Wandung 23 und eine bezüglich der Blattebene vorne liegende zweite Wandung 24, zwischen denen taschenförmig ein Sperr-Riegel 25 beweglich eingesetzt ist. Dabei ist der Sperr-Riegel 25 zwischen einem Lager 28 und einem Wälzlager 29 geführt.

Das Lager 28 ist durch einen Rundsteg 30 gebildet, an welchem eine Laufkante 31 des Sperr-Riegels 25 sich abstützt bzw. abrollt oder entlang gleitet. Das gegenüber dem Lager 28 angeordnete Wälzlager 29 umfasst eine Rundausnehmung 32, in welcher ein Zahn 34 des Sperr-Riegels 25 gelagert ist. Der Zahn 34 und die Rundausnehmung 32 bilden das Wälzlager 29. Bei einer Bewegung des Sperr-Riegels 25 bewegt sich der Zahn 34 in der Rundausnehmung 32 abrollend und/oder gleitend entlang. Auch ist eine translatorische Verschiebung in Zahnlängsrichtung ermöglicht. Durch die Lagerung des Sperr-Riegels 25 zwischen dem Lager 28 und dem Wälzlager 29 wird im Zusammenspiel zwischen der Laufkante 31 und der Formung des Zahns 34 bzw. der Rundausnehmung 32 ein definierter Bewegungsablauf des Sperr-Riegels 25 zwischen der dargestellten Löseposition und einer Sperrposition geschaffen, was insbesondere durch die folgenden Zeichnungen veranschaulicht werden wird.

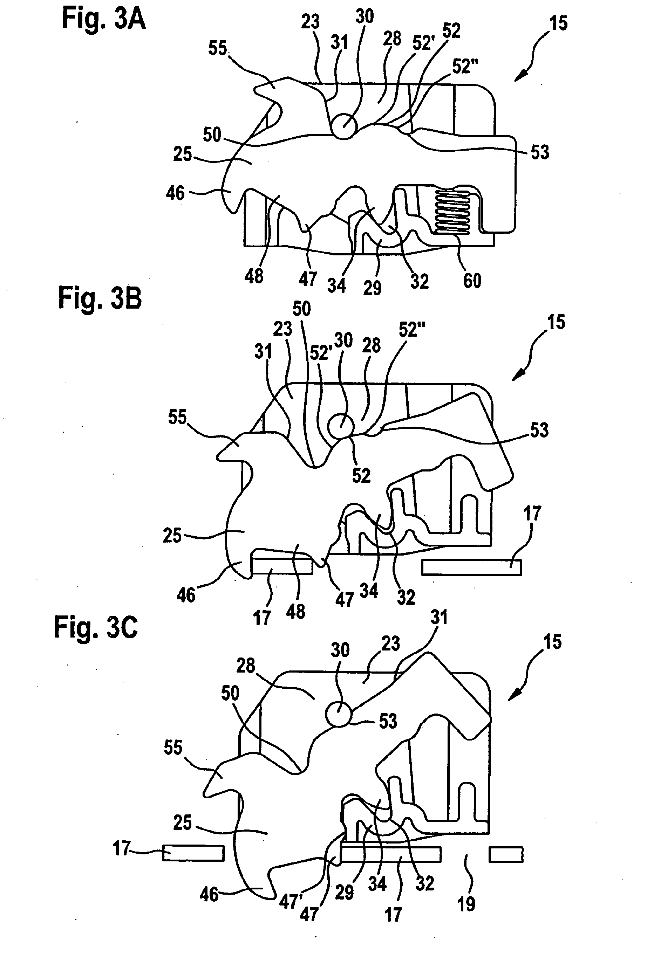

Zur Auslösung des Sperrriegels 25 wird ein aus Fig. 3A ersichtliches Federelement 60 verwendet, was sich von unten gegen den in Fig. 1A rechts des Wälzlagers 29 liegenden Hebelarm des Sperr-Riegels 25 abstützt.

Zum Verständnis der Wirkungsweise der Memory-Baugruppe 15 ist in Fig. 1A weiter ein Steuerhebel 37 eingezeichnet, der drehbeweglich über eine Achse 38 fest mit einem hier nicht dargestellten Fahrzeugsitz (z.B. der Fahrzeugsitz 2 gemäß Fig. 7) verbunden ist. Der Steuerhebel 37 wirkt insbesondere mit einer ersten Steuerrampe 40 zusammen, die durch die Oberkante der ersten Wandung 23 der Memory-Baugruppe 15 gebildet ist. In der dargestellten sitzfesten Position der Memory-Baugruppe 15 greift das freie Ende des Steuerhebels 37 in eine Ausnehmung 42 der ersten Steuerrampe 40 ein. Über diesen Formschluss ist eine Ankopplung der Memory-Baugruppe 15 an den Steuerhebel 37 und somit an den Fahrzeugsitz gegeben. Die Memory-Baugruppe 15 bewegt sich in der dargestellten Position mit dem Steuerhebel 17 bzw. mit dem Fahrzeugsitz der Unterschiene 7 entlang. Gleichzeitig drückt das Freiende des Steuerhebels 37 in der dargestellten Lage innerhalb der Ausnehmung 42 gegen den rechts des Wälzlagers 29 angeordneten Hebel des Sperr-Riegels 25 und somit gegen das Federelement 60. Der Sperr-Riegel 25 befindet sich in seiner Löseposition.

Die Memory-Baugruppe 15 umfasst weiter eine zweite Steuerrampe 44, die der zweiten Wandung 24 angelehnt ist. Diese zweite Steuerrampe 44 dient zur Wechselwirkung mit einem Komforthebel, der zur Auslösung einer Arretierung einer vorgeklappten Rückenlehne mit einem Sitzunterteil vorgesehen ist (siehe Fig. 7).

Der Sperr-Riegel 25 weist ferner an seinem links des Wälzlagers angeordneten Hebelarm eine erste und eine zweite Sperrnase 46 bzw. 47 auf, zwischen denen eine Einbuchtung 48 eingebracht ist. Sowohl die beiden Sperrnasen 46 bzw. 47 als auch die Einbuchtung 48 dienen zu einer sperrenden Wechselwirkung des Sperr-Riegels 25 mit den Öffnungen 19 bzw. mit den Stegen 17 der Unterschiene 7, sofern sich der Sperr-Riegel 25 in einer Sperrposition befindet. Die Laufkante 31 des Sperr-Riegels 25 weist eine erste Ausnehmung 50 auf, die sich in der dargestellten Löseposition gegen den Rundsteg 30 des Lagers 28 abstützt. Weiter ist der Laufkante 31 ein Wulst 52 eingeprägt, der die erste Ausnehmung 50 von einer zweiten Ausnehmung 53 räumlich trennt. Die zweite Ausnehmung 53 dient zu einer Einrastung des Sperr-Riegels 25 gegenüber dem Rundsteg 30 in einer ersten Sperrposition.

In Fig. 1B ist die Memory-Baugruppe 15 gemäß Fig. 1A wiederum in halb transparenter Darstellung gezeigt, wobei sich nun jedoch der Sperr-Riegel 25 in der ersten Sperrposition befindet. Die Bewegung des Sperr-Riegels 25 von der Löseposition gemäß Fig. 1A in die erste Sperrposition gemäß Fig. 1B wird durch eine Drehung des Steuerhebels 37 im Uhrzeigersinn bewirkt. Die Drehbewegung des Steuerhebels 37 wird verursacht durch ein Umklappen der Rückenlehne 5 des Fahrzeugsitzes, die - nicht dargestellt - über einen Bowdenzug mit dem Steuerhebel 37 zusammenwirkt. Mit anderen Worten zeigt Fig. 1B das Ablegen der Memory-Baugruppe 15 bei Betätigung des Umklappmechanismus des Fahrzeugsitzes zum Zwecke des Ein- oder Ausstiegs.

Durch die Drehung des Steuerhebels 37 im Uhrzeigersinn wird eine Bewegung des in der Zeichnung rechts des Wälzlagers 29 liegenden Hebels des Sperr-Riegels 25 nach oben ermöglicht. Diese Bewegung erfolgt, da das rechts liegende Hebelende des Sperr-Riegels 25 mittels des Federelements 60 gem. Fig. 3A gegen den zurückweichenden Steuerhebel 37 gepresst wird. Somit erfolgt insgesamt eine Drehbewegung des Sperr-Riegels 25 bezüglich Fig. 1A gegen den Uhrzeigersinn.

Bei der Drehbewegung des Sperr-Riegels 25 gegen den Uhrzeigersinn rollt sich die Laufkante 31 nach links gegen den Rundsteg 23 des Lagers 28 ab. In der in Fig. 1B dargestellten Position ist dies daran zu erkennen, dass sich der Sperr-Riegel 25 nunmehr mit der zweiten Ausnehmung 53 an dem Rundsteg 30 abstützt. Der Wulst 52 ist bereits überschritten. Somit greift das freie Ende des Sperr-Riegels 25 tiefer in die Öffnung 19 der Unterschiene 7 ein. Durch die Gestaltung der Laufkante 31 ist die Bewegung des Zahns 34 in der Rundausnehmung 32 des Wälzlagers 29 nicht frei. Vielmehr führt das Zusammenspiel zwischen dem Lager 28 und dem Wälzlager 29 dazu, dass sich der Zahn 34 in der in Fig. 1B gezeigten Position gegenüber der Rundausnehmung 32 nun in einem weiter links liegenden Punkt abstützt. Folglich hat sich der rechts des Wälzlagers 29 liegende Hebelarm des Sperr-Riegels 25 verlängert, wodurch eine stärkere Haltewirkung des Sperr-Riegels 25 gegenüber der Unterschiene 7 bewirkt ist.

In der dargestellten ersten Sperrposition greift der Sperr-Riegel 25 mit den Sperrnasen 46 und 47 in eine Öffnung 19 der Unterschiene 7 ein. Die Memory-Baugruppe 15 ist gegenüber der Unterschiene 7 versperrt. Nach einer leichten Weiterdrehung des Steuerhebels 37 ist die Kopplung der Memory-Baugruppe 15 mit dem Fahrzeugsitz aufgehoben, so dass nunmehr die Memory-Baugruppe 15 abgelegt ist. Der Fahrzeugsitz kann ohne Memory-Baugruppe 15 gemäß Fig. 1B nach links verschoben werden.

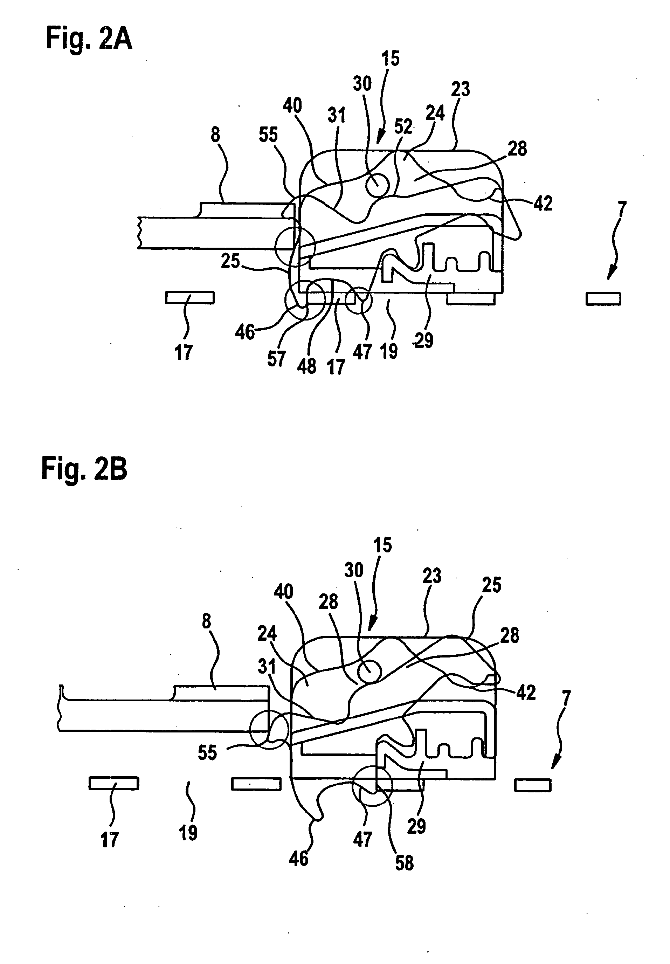

In Fig. 2A ist die Memory-Baugruppe 15 gemäß Fig. 1A wiederum in einer halb transparenten Darstellung gezeigt, wobei sich nunmehr der Sperr-Riegel 25 in seiner zweiten Sperrposition befindet. Diese zweite Sperrposition tritt auf, wenn bei Betätigung der Rückenlehne die Memory-Baugruppe 15 derart an der Unterschiene 7 platziert ist, dass ein Riegelgesperre durch Eingriff des Sperr-Riegels 25 in eine Öffnung 19 der Unterschiene 7 nicht möglich ist. Stattdessen rastet die Einbuchtung 48 an einem Steg 17 der Unterschiene 7 ein. Durch die Ausstattung des Sperr-Riegels 25 mit einer ersten und einer zweiten Rastnase 46 bzw. 47 und einer dazwischen liegenden Einbuchtung 48 wird es somit möglich, die Memory-Baugruppe 15 sowohl an einer Öffnung als auch an einem Steg der Unterschiene 7 abzulegen.

In der in Fig. 2A dargestellten zweiten Sperrposition des Sperr-Riegels 25 stützt sich der Wulst 52 der Laufkante 31 gegen den Rundsteg 30 ab. In dieser Position wird mit einem relativ kurzen, links des Rundstegs 30 liegenden Hebelarm der Sperr-Riegel 25 gegen den Steg 17 der Unterschiene 7 gepresst.

Während in den Fig. 1 die Ablage der Memory-Baugruppe 15 bei Betätigung einer vorübergehenden Sitzlängsverstellung gezeigt ist, ist in Fig. 2A der Anschlag des zurücklaufenden Fahrzeugsitzes vor der Wiederaufnahme der Memory-Baugruppe 15 dargestellt. Hierzu ist ein Teil der sitzfest montierten Oberschiene 8 mit eingezeichnet, die von links kommend gegen den Sperr-Riegel 25 anschlägt. Dabei trifft die zurücklaufende Oberschiene 8 aufgrund ihrer Geometrie in der dargestellten zweiten Sperrposition des Sperr-Riegels 25 dessen Anschlagnase 55 nicht. Stattdessen schlägt sie dem Sperr-Riegel 25 in einem Punkt zwischen der Anschlagnase 55 und der ersten Spermase 46 an. Durch die Gestaltung des Sperr-Riegels 25 führt dies zu einer Pressung des links des Wälzlagers 29 liegenden Hebels des Sperr-Riegels 25 gegen den Steg 17. Hierfür ist eine flache Anschlagfläche 57 der ersten Sperrnase 46 vorgesehen, die sich flächig gegen den Steg 17 abstützen kann. Somit ist verhindert, dass der Anschlag der Oberschiene 8 an die Memory-Baugruppe 15 zu einem Loslösen dieser gegenüber der Unterschiene 7 führt. Im übrigen ist das rechts des Wälzlagers 29 liegende Ende des Sperr-Riegels 25 mit einer geraden Anschlagkante versehen, die den hinteren Sitzanschlag darstellt.

In Fig. 2B ist die gleiche Situation mit zurücklaufender Oberschiene 8 dargestellt, wobei sich nun jedoch der Sperr-Riegel 25 in der ersten Sperrposition befindet, die auch aus Fig. 1B ersichtlich wird. In diesem Fall schlägt die zurücklaufende Oberschiene 8 gegen die Oberseite der Anschlagnase 55 auf. Auch dies führt zu einer nach unten gerichteten Kraft auf den Sperr-Riegel 25, die durch eine ebene Anschlagfläche 58 der zweiten Sperrnase 47 aufgefangen wird. Die ebene Anschlagfläche 58 stützt sich hierzu gegen einen Steg 17 der Unterschiene 7 ab.

In den Fig. 3 ist die Memory-Baugruppe 15 noch einmal zur Verdeutlichung in einer geöffneten Darstellung gezeigt. Gegenüber den Fig. 1 und 2 ist die vordere bzw. zweite Wandung 24 entfernt.

Fig. 3A zeigt die Memory-Baugruppe 15, wobei sich der Sperr-Riegel in einer Löseposition befindet. Man erkennt in der geöffneten Darstellung das durch den Rundsteg 30 und die Laufkante 31 gebildete Lager und das die Rundausnehmung 32 und den Zahn 34 umfassende Wälzlager 29.

Die Rundausnehmung 32 des Wälzlagers 29 wird durch einen Kunststoffsteg gebildet, der zwischen die erste und die zweite Wandung 23 bzw. 24 der Memory-Baugruppe 15 eingesetzt ist. In einer Verlängerung dieses Stegs ist ein Federelement 60 gelagert, was gegenüber dem rechts des Wälzlagers 29 angeordneten Hebelarm des Sperr-Riegels 25 wirkt. Um ein Verrutschen des Federelements 60 gegenüber dem Sperr-Riegel 25 zu verhindern, ist dort eine entsprechende Wulst angeordnet. Aus Fig. 3A ist weiter zu entnehmen, dass der Wulst 52 sich von einem runden Verlauf durch eine linke und durch eine rechte gering erhabene Ecke 52' bzw. 52 " unterscheidet. Deren Funktion wird aus Fig. 3B ersichtlich.

In Fig. 3B ist die Memory-Baugruppe 15 in geöffneter Darstellung gezeigt, wobei sich der Sperr-Riegel 25 in seiner zweiten Sperrposition befindet, wobei die Einbuchtung 48 mit einem Steg 17 der Unterschiene 7 verrastet ist. Man erkennt hierbei deutlich, dass sich in dieser Position der Sperr-Riegel 25 mit der Wulst 52 seiner Laufkante 31 an dem Rundsteg 30 abstützt. Entsprechend ist der Zahn 34 in die Rundausnehmung 32 eingesenkt. Die linke und die rechte Ecke 52' bzw. 52" des Wulstes 52 verhindern hierbei, dass der Sperr-Riegel 25 am Rundsteg 30 entlang gleiten kann. Beim Auflaufen des zurückversetzten Fahrzeugsitzes wird so eine gewollte Klemmung erzielt. Dabei wird der Rundsteg 30 zum neuen Drehpol des Sperr-Riegels 25.

In Fig. 3C ist die Memory-Baugruppe 15 geöffnet dargestellt, wobei sich der Sperr-Riegel 25 in seiner ersten Sperrposition befindet. Nach Art eines Riegelgesperres greift dabei der vordere Teil des Sperr-Riegels 25 in eine Öffnung 19 der Unterschiene 7 ein. In dieser Position stützt sich der Sperr-Riegel 25 mit der zweiten Ausnehmung 53 seiner Laufkante 31 gegen den Rundsteg 30 des Lagers 23 ab. Entsprechend ist die Lage des Zahnes 34 in der Rundausnehmung 32 verändert. Man erkennt ferner, dass die zweite Spermase 47 einen Radius 47'aufweist, der ein Durchlaufen des Sperr-Riegels 25 bei auflaufendem Fahrzeugsitz verhindert.

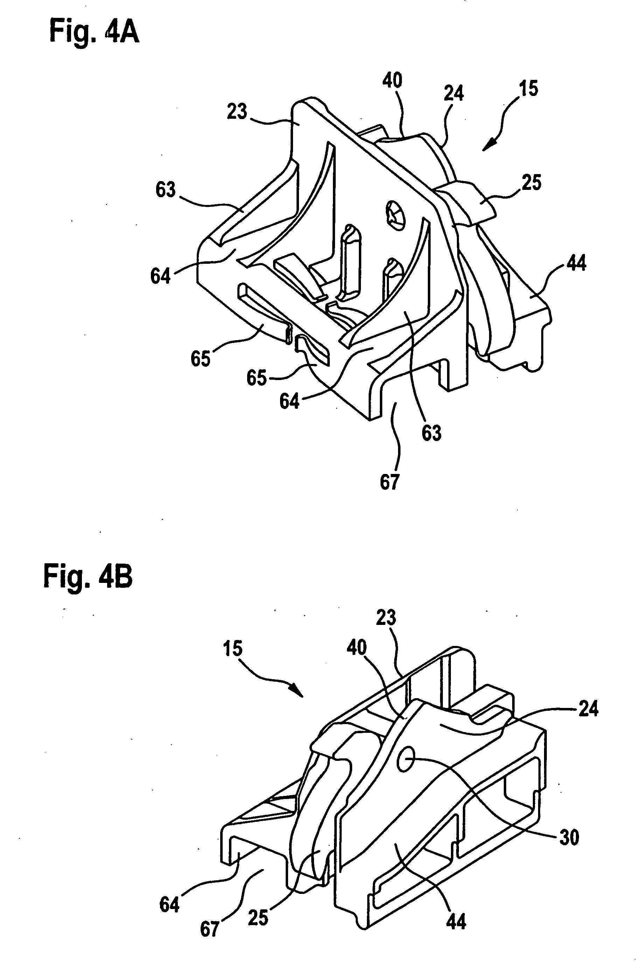

In Fig. 4A ist die Memory-Baugruppe 15 perspektivisch dargestellt. In der dargestellten Perspektive ist nunmehr deutlich die hintere bzw. erste Wandung 23 der Memory-Baugruppe 15 zu erkennen. Die Rückseite der ersten Wandung 23 ist mit Versteifungen 63 versehen, die die Ausfallsicherheit oder ein Verbiegen der Memory-Baugruppe 15 verhindern. Weiter ist der zwischen der ersten Wandung 23 und der zweiten Wandung 24 eingesetzte Sperr-Riegel 25 zu erkennen. Die vorderen Kanten der ersten Wandung 23 und der zweiten Wandung 24 sind geringfügig aufgeweitet, um ein leichtes Eintauchen der erster und der zweiten Sperrnase 46 bzw. 47 zu ermöglichen. Insbesondere wird hierdurch bei einer Gratbildung auf den Kanten des Sperr-Riegels 25, die beispielsweise bei einem als Gußteil ausgebildeten Sperr-Riegel 25 auftreten kann, eine Klemmung verhindert. Die Oberkante der zweiten Wandung 24 ist deutlich als erste Steuerrampe 40 ausgebildet. Der zweiten Wandung 24 angelehnt ist eine breite zweite Steuerrampe 44, die zur Führung eines Komforthebels dient.

An der Rückseite der ersten Wandung 23 ist weiter ein Übergriff 64 angeordnet, welcher der Führung in einem Führungselement entlang der Unterschiene dient. Hierzu wird der Übergriff 64 auf das entsprechende Führungselement aufgesetzt, wobei die Federbeine 65 für eine entsprechende Klemmung sorgen. Die Memory-Baugruppe 15 ist somit mittels des Übergriffes 64 und der seitlich sowie oben angeordneten Federbeine 65 sicher an einem Führungselement der Unterschiene 7 geführt, welches in die übergriffene Öffnung 67 eingesetzt ist. Durch die seitlichen und oberen Federbeine 65 wird insbesondere ein Klappern der Memmory-Baugruppe 15 auf der Führungsschiene verhindert.

Fig. 4B zeigt das Memory-Bauteil 15 gemäß Fig. 4A perspektivisch aus einer anderen Blickrichtung. In dieser Darstellung wird der Blick auf die zweite Wandung 24 freigegeben. Man erkennt den taschenförmigen Aufbau der Memory-Baugruppe 15, wobei der Sperr-Riegel 25 zwischen der ersten Wandung 23 und der zweiten Wandung 24 eingesetzt ist. Zwischen der ersten und der zweiten Wandung 23 bzw. 24 ist der Rundsteg 30 zur Ausbildung des Lagers 32 eingesetzt.

Aus Fig 4B wird deutlich sichtbar, dass der zweiten Wandung 24 eine zweite Steuerrampe 44 angelehnt ist, die der Führung eines Komforthebels dient, welcher zur Auslösung der Arretierung zwischen der vorgeklappten Rückenlehne 4 und dem Sitzunterteil 5 eines Fahrzeugsitzes 2 gemäß Fig. 7 vorgesehen ist.

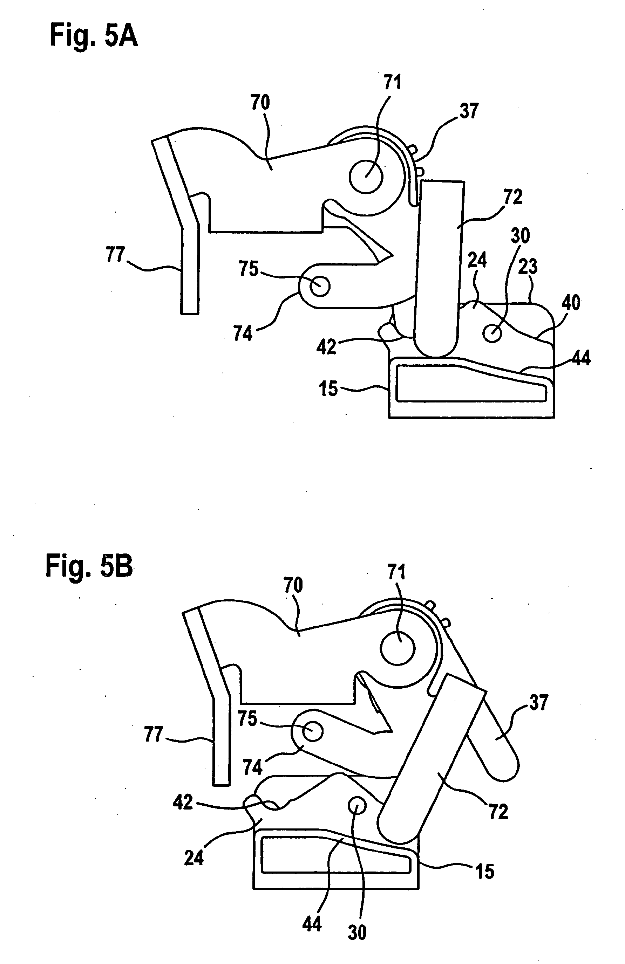

In den Fig. 5 ist schematisch das Zusammenspiel zwischen der Memory-Baugruppe 15 und der sitzfesten Auslöse- bzw. Aufnahmemechanik zum Ablegen bzw. zum Aufnehmen der Memory-Baugruppe 15 dargestellt.

Als Teil der Auslösemechanik ist hierbei ein sitzfest montierter Haltewinkel 70 dargestellt, an welchen in einer Lagerachse 71 drehbar der Steuerhebel 37 sowie ein Komforthebel 72 befestigt sind.

In Fig. 5A ist die Lage des Haltewinkels 70 bzw. des Fahrzeugsitzes dargestellt, in welcher die Memory-Baugruppe 15 fest mit dem Fahrzeugsitz verbunden ist. Man erkennt dies daran, dass das vordere Ende des Steuerhebels 37 gemäß Fig. 1A sich in der Ausnehmung 42 der zweiten Wandung 24 befindet. In dieser sitzfesten Position der Memory-Baugruppe befinden sich sowohl der Steuerhebel 37 als auch der Komforthebel 72 in einer aufrechten Position. Der Steuerhebel 37 ist mit einem nicht sichtbaren Bowdenzug an eine umklappbare Rückenlehne gekoppelt, so dass er in der hier dargestellten Betrachtung bei einem Umklappen derselbigen gegen den Uhrzeigersinn bewegt wird. Der Komforthebel 72 wird mit einem Gesperre zur Arretierung der umgeklappten Rückenlehne an ein Sitzunterteil eines Fahrzeugsitzes gemäß Fig. 7 gekoppelt. Hierzu weist der Komforthebel 72 einen verlängerten Hebelarm 74 auf, an dessen Ende eine Öffnung 75 eingebracht ist. In diese Öffnung 75 wird der Seilzug eines Bowdenzuges befestigt, wobei sich die Hülle des Bowdenzuges an der Abstützung 77 des Haltewinkels 70 abstützt. In der dargestellten aufrechten Position des Komforthebels 72 liegt keine Arretierung vor. Das Gesperre ist nicht ausgelöst.

Fig. 5B zeigt das Auflaufen des Fahrzeugsitzes von rechts kommend auf die Memory-Baugruppe 15. Da der Fahrzeugsitz eine Komfortfunktion aufweist, d.h. eine Arretierung der Rückenlehne mit dem Sitzunterteil im umgeklappten Zustand, ist beim Zurückfahren des Fahrzeugsitzes der Steuerhebel 37 infolge der geklappten Rückenlehne in der dargestellten Position gedreht. Der Komforthebel 72 ist durch eine mechanische Vorspannung, die beispielsweise durch eine um die Lagerachse 71 angeordnete Ring- oder Blattfeder bewirkt wird, bei vorgeschobenem Fahrzeugsitz in die gezeigte Position gedreht.

Beim Zurückfahren des Fahrzeugsitzes läuft nun der Komforthebel 72 mit seinem Ende die Steuerrampe 44 des abgelegten Memory-Bausteins 15 empor. Dabei wird der Komforthebel 72 in der Lagerachse 71 gegen den Uhrzeigersinn gedreht. Durch diese Drehbewegung verlängert sich der Abstand zwischen der Öffnung 74 und der Abstützung 77, so dass ein Zug in dem mit dem Gesperre zwischen Rückenlehne und Sitzunterteil verbundenen, nicht dargestellten Bowdenzug erzeugt wird. Das Gesperre wird gelöst, so dass die Rückenlehne gegenüber dem Sitzunterteil in die aufrechte Position zurückgeschwenkt werden kann. Über die erste Steuerrampe 40 wird der Steuerhebel 37 weiter gegen den Uhrzeigersinn gedreht, was einer erneute Versperrung zwischen der Ober- und der Unterschiene bewirkt. Durch die Aufrichtung der Rückenlehne 4 gerät nun der Steuerhebel 37 wiederum in die in Fig. 5A gezeigte aufrechte Position, in welche er schließlich in die Ausnehmung 42 eingreift und den nicht dargestellten Sperr Riegel 25 in eine Löseposition drückt. Der Fahrzeugsitz befindet sich letztendlich bei oder durch Aufnahme der Memory-Baugruppe 15 wieder in der voreingestellten Komfortposition.

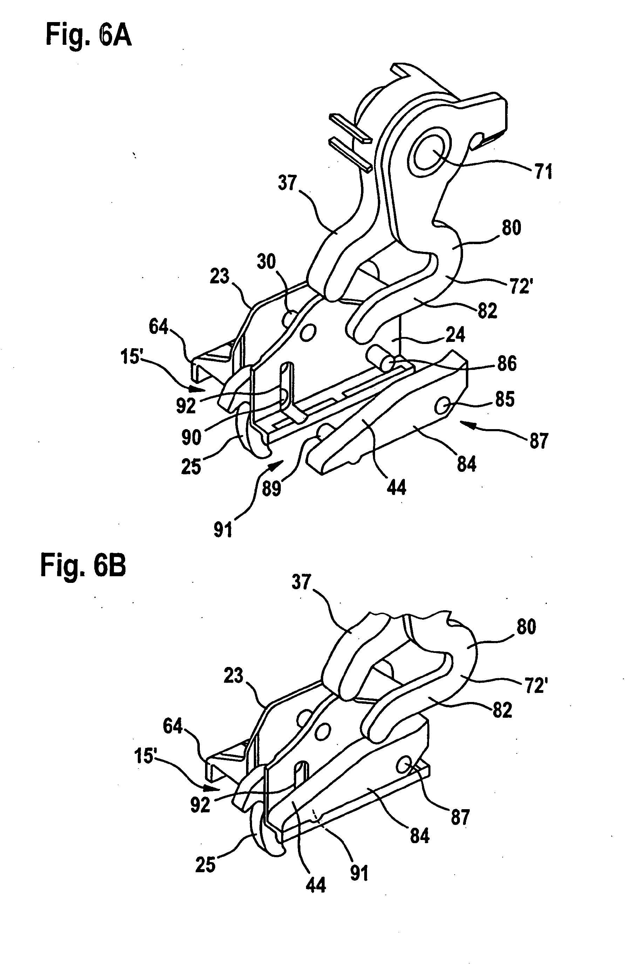

In den Fig. 6 ist jeweils in einer dreidimensionalen Darstellung eine Memory-Baugruppe 15' gezeigt, die eine geänderte Ausgestaltung der zweiten Steuerrampe 44 aufweist. Auch der mit der zweiten Steuerrampe 44 zusammenwirkende Komforthebel 72' ist gegenüber den Fig. 5 anders ausgebildet. Insbesondere weist der Komforthebel 72' einen ausgeformten Bogen 80 auf, an welchem ein horizontaler Hebelarm 82 angeordnet ist.

Die zweite Steuerrampe 44 ist als Oberfläche einer Wippe 84 ausgebildet. Die Wippe 84 weist eine Öffnung 85 auf, über welche sie drehbeweglich auf einen mit der zweiten Wandung 24 fest verbundenen Zapfen 86 aufgesteckt werden kann. Mittels des Zapfens 86 und der Öffnung 85 wird ein erstes Drehgelenk der Wippe 84 gebildet.

An ihrem dem ersten Drehgelenk 87 abgewandten freien Ende weist die Wippe 84 einen weiteren Zapfen 89 auf, der drehbeweglich in eine Öffnung 90 des beweglichen Sperr-Riegels 25 eingesetzt wird. Der Zapfen 89 und die Öffnung 90 des Sperr-Riegels 25 bilden ein zweites Drehgelenk 91 der Wippe 84. Um eine Drehung des freien Endes der Wippe 84 zu ermöglichen, ist der Zapfen 89 des zweiten Drehgelenks 91 durch eine kreisbogenförmige Öffnung 92 in der zweiten Wandung 24 geführt.

Aus Fig. 6B wird die Wirkungsweise der derart ausgestalteten Wippe 84 ersichtlich. Bei einem Zurückstellen des Fahrzeugsitzes gegen die abgelegte Memory-Baugruppe 15' bewegt sich der horizontale Hebelarm 82 des Komforthebels 72' die zweite Steuerrampe 44 der Wippe 84 empor. Somit entsteht eine nach unten gerichtete Kraft auf das freie, das zweite Drehgelenk 91 aufweisende Ende der Wippe 84. Hierdurch wird ein Drehmoment bewirkt, so dass sich die Wippe 84 in dem ersten Drehgelenk 87 gegen den Uhrzeigersinn bewegen möchte. Über den Zapfen des zweiten Drehgelenks 91 wird diese durch das Auflaufen des Komforthebels 72' verursachte nach unten gerichtete Kraft auf den Sperr-Riegel 25 übertragen. Hierdurch wird die Haltekraft der Memory-Baugruppe 15 in der abgelegten Position bezüglich der Unterschiene erhöht.

Wird der Sperr-Riegel 25 durch den Steuerhebel 37 aus seiner Sperrposition in eine Löseposition gebracht, so bewegt sich die Wippe 84 mit dem Sperr-Riegel 25 mit. Diese Bewegung ist durch die kreisbogenförmige Öffnung 92 in der zweiten Wandung 24 der Memory-Baugruppe 15 ermöglicht.

### Bezugszeichenliste

- 1: Verstellsystem
- 2: Fahrzeugsitz
- 4: Rückenlehne
- 5: Sitzunterteil
- 7: Unterschiene
- 8: Oberschiene
- 10: Betätigungshebel
- 11: Befestigungsachse
- 12: Pfeile
- 13: Betätigungshebel
- 15: Memory-Baugruppe
- 15': Memory-Baugruppe
- 17: Stege
- 19: Öffnungen
- 23: erste Wandung
- 24: zweite Wandung
- 25: Sperr-Riegel
- 28: Lager
- 29: Wälzlager
- 30: Rundsteg
- 31: Laufkante
- 32: Rundausnehmung
- 34: Zahn
- 37: Steuerhebel
- 38: Achse
- 40: erste Steuerrampe
- 42: Ausnehmung
- 44: zweite Steuerrampe
- 46: erste Spermase
- 47: zweite Spermase
- 47': Radius
- 48: Einbuchtung
- 50: erste Ausnehmung
- 52: Wulst
- 52', 52": Ecken
- 53: zweite Ausnehmung
- 55: Anschlagnase
- 57: Anschlagfläche
- 58: Anschlagfläche
- 60: Federelement
- 63: Versteifungen
- 64: Übergriff
- 65: Federbeine
- 67: Öffnung
- 70: Haltewinkel
- 71: Lagerachse
- 72: Komforthebel
- 72': Komforthebel
- 74: Hebelarm
- 75: Öffnung
- 77: Abstützung
- 80: Bogen
- 82: horizontaler Hebelarm
- 84: Wippe
- 85: Öffnung
- 86: Zapfen
- 87: erstes Drehgelenk
- 89: Zapfen
- 90: Öffnung
- 91: zweites Drehgelenk
- 92: Öffnung Kreisbogen

## Patentansprüche

1. Verstellsystem (1) für einen Fahrzeugsitz (2) mit einer fahrzeugfest montierbaren Unterschiene (7), einer entlang der Unterschiene (7) verfahrbaren, sitzfest montierbaren Oberschiene (8) und mit einer der Unterschiene (7) entlang bewegbaren, wechselweise sitz- oder fahrzeugfesten Memory-Baugruppe (15,15'), die einen beweglichen Sperr-Riegel (25) zur Ausbildung eines Formgesperres mit der Unterschiene (7) und Mittel zur Ausbildung eines Formgesperres mit einem sitzfesten, beweglichen Steuerhebel (37) umfasst, wobei der Sperr-Riegel (25) durch den sitzfesten Steuerhebel (37) betätigbar ist,
**dadurch gekennzeichnet,**
**dass** der Sperr-Riegel (25) in der Memory-Baugruppe (15,15') kurvengesteuert in einem Wälzlager (29) drehbeweglich gelagert ist, wobei das Wälzlager (29) durch einen mit einer offenen Pfanne kraftschlüssig gepaarten Lagerzapfen gebildet ist.

2. Verstellsystem (1) nach Anspruch 1,
**dadurch gekennzeichnet,**
**dass** zur Kurvensteuerung ein Lager (28) eingesetzt ist.

3. Verstellsystem (1) nach Anspruch 2,
**dadurch gekennzeichnet,**
**dass** das Lager (28) durch einen Rundsteg (30) gebildet ist, an dem der Sperr-Riegel (25) mit einer Laufkante (31) läuft.

4. Verstellsystem (1) nach Anspruch 2 oder 3,
**dadurch gekennzeichnet,**
**dass** der Sperr-Riegel (25) zwischen dem Wälzlager (29) und dem Lager (28) geführt ist.

5. Verstellsystem (1) nach einem der vorhergehenden Ansprüche,
**dadurch gekennzeichnet,**
**dass** das Wälzlager (29) durch eine der Unterschiene (7) abgewandte Rundausnehmung (32) gebildet ist, in welcher der Sperr-Riegel (25) mittels eines angeformten Zahnes (34) gelagert ist.

6. Verstellsystem (1) nach Anspruch 5,
**dadurch gekennzeichnet,**
**dass** die Rundausnehmung (32) im Wesentlichen U- oder V-förmig ausgebildet ist.

7. Verstellsystem (1) nach einem der vorhergehenden Ansprüche,
**dadurch gekennzeichnet,**
**dass** die Unterschiene (7) durch Stege (17) voneinander getrennte Öffnungen (19) aufweist, in welche der Sperr-Riegel (25) in einer ersten Sperrposition eingreift.

8. Verstellsystem (1) nach Anspruch 7,
**dadurch gekennzeichnet,**
**dass** der Sperr-Riegel (25) eine zwischen Sperrnasen (46,47) angeordnete Einbuchtung (48) aufweist, die in einer zweiten Sperrposition einen Steg (17) der Unterschiene (7) umgreift.

9. Verstellsystem (1) nach einem der Ansprüche 3 bis 8,
**dadurch gekennzeichnet,**
**dass** die Laufkante (31) des Sperr-Riegels (25) eine erste Ausnehmung (50) zur Abstützung gegenüber dem Rundsteg (30) in einer Löseposition und eine durch einen Wulst (52) von der ersten Ausnehmung (50) beanstandete, zweite Ausnehmung (53) zur Abstützung gegenüber dem Rundsteg (30) in der ersten Sperrposition aufweist.

10. Verstellsystem (1) nach einem der vorherigen Ansprüche,
**dadurch gekennzeichnet,**
**dass** die Memory-Baugruppe (15,15') als Mittel zur Ausbildung eines Formgesperres mit dem Steuerhebel eine Ausnehmung (42) zur Aufnahme zumindest eines Teils des Steuerhebels (37) aufweist.

11. Verstellsystem (1) nach Anspruch 10,
**dadurch gekennzeichnet,**
**dass** die Ausnehmung (42) als Teil einer ersten Steuerrampe (40) zur Führung des Steuerhebels (37) ausgebildet ist.

12. Verstellsystem (1) nach Anspruch 10 oder 11,
**dadurch gekennzeichnet,**
**dass** die Ausnehmung (42) derart ausgebildet ist, dass der darin aufgenommene Steuerhebel (37) gleichzeitig zu einer lösenden Betätigung des Sperr-Riegels (25) führt.

13. Verstellsystem (1) nach Anspruch 11 oder 12,
**dadurch gekennzeichnet,**
**dass** der Sperr-Riegel (25) in einer durch eine erste (23) und durch eine zweite Wandfläche (24) gebildete, taschenförmigen Aufnahme geführt ist, wobei der Rundsteg (30) die erste und die zweite Wandfläche (23,24) verbindend gelagert ist, wobei die Rundausnehmung (32) des Wälzlagers (29) zwischen der ersten und der zweiten Wandfläche (23,24) angeordnet ist, und wobei die erste Steuerrampe (40) durch die Oberkante einer Wandfläche gebildet ist.

14. Verstellsystem (1) nach einem der vorherigen Ansprüche,
**dadurch gekennzeichnet,**
**dass** die Memory-Baugruppe (15,15') eine zweite Steuerrampe (44) zur Führung eines sitzfesten, beweglichen Komforthebels (72) aufweist, die derart ausgebildet ist, dass der Komforthebel (72) beim Auflaufen auf die zweite Steuerrampe (44) eine Arretierung der Sitzlehne (4) in einem vorgeklappten Zustand löst.

15. Verstellsystem (1) nach Anspruch 14,
**dadurch gekennzeichnet,**
**dass** die zweite Steuerrampe (44) der die erste Steuerrampe (40) bildenden Wandfläche angeformt oder angelehnt ist.

16. Verstellsystem (1) nach Anspruch 14 oder 15,
**dadurch gekennzeichnet,**
**dass** die zweite Steuerrampe (44) durch die Oberkante einer beweglichen Wippe (84) gebildet ist, die mittels eines ersten Drehgelenks (87) der Memory-Baugruppe (25) ortsfest angelenkt ist, und die mit ihrem freien Ende über ein zweites Drehgelenk (91) mit dem beweglichen Sperr-Riegel (25) verbunden ist.

17. Verstellsystem (1) nach Anspruch 16,
**dadurch gekennzeichnet,**
**dass** das zweite Drehgelenk (91) an einem flachen Ende der Wippe (84) mit ansteigender zweiter Steuerrampe (44) angeordnet ist.

18. Verstellsystem (1) nach Anspruch 16 oder 17,
**dadurch gekennzeichnet,**
**dass** die Wippe (84) einer Wandfläche mittels des ersten Drehgelenks (87) drehbar angelehnt ist, und dass die Wippe (84) über das zweite Drehgelenk (91) durch eine kreisbogenförmige Öffnung (90) in der Wandfläche mit dem Sperr-Riegel (25) verbunden ist.

## Claims

1. Adjusting system (1) for a vehicle seat (2) comprising a bottom rail (7) which can be attached rigidly to a vehicle, a top rail (8) which can be rigidly attached to the seat and is movable along the bottom rail (7), and a memory module (15, 15') which can be alternately rigidly attached to either the vehicle or the seat and is movable along the bottom rail (7), said memory module (15, 15') comprising a movable safety catch (25) for forming a positional locking system with the bottom rail (7) and a means for forming a positional locking system with a movable control lever (37) being mounted rigidly to the seat, whereas the safety catch (25) can be actuated via the seat-mounted control lever (37),
**characterized in**
the safety catch (25) being mounted cam-controlled in the memory module (15, 15') in a rolling bearing (29) so as to be able to rotate, wherein the rolling bearing (29) is formed by a bearing journal which is non-positively linked with an open seat.

2. Adjusting system (1) according to claim 1,
**characterized in**
a bearing (28) for the purpose of cam control.

3. Adjusting system (1) according to claim 2
**characterized in**
the bearing (28) being formed by a round web (30), on which a running edge (31) of the safety catch (25) extends.

4. Adjusting system (1) according to one of the claims 2 or 3
**characterized in**
the safety catch (25) being guided between the rolling bearing (29) and the bearing (28).

5. Adjusting system (1) according to one of the previous claims,
**characterized in**
the rolling bearing (29) comprising a round recess (32) facing away from the bottom rail (7) and the safety catch (25) being mounted by means of an integrally formed tooth (34) in said round recess (32).

6. Adjusting system (1) according to claim 5,
**characterized in**
the round recess (32) being essentially U- or V-shaped.

7. Adjusting system (1) according to one of the previous claims,
**characterized in**
the bottom rail (7) having openings (19) separated from one another by webs (17), and the safety catch (25) engaging in a first locked position with said openings (19).

8. Adjusting system (1) according to claim 7,
**characterized in**
the safety catch (25) having an indentation (48) between locking lugs (46, 47), said indentation (48) surrounding a web (17) of the bottom rail (7) in a second locked position.

9. Adjusting system (1) according to one of the claims 3 to 8,
**characterized in**
the running edge (31) of the safety catch (25) having a first recess (50) for providing support in a release position in relation to the round web (30) and having a second recess (53), which is set apart from the first recess (50) by a collar (50), for providing support in the first locked position in relation to the round web (30).

10. Adjusting system (1) according to one of the previous claims,
**characterized in**
the memory module (15, 15') having, as a means for forming a positional locking mechanism with the control lever, a recess (42) for receiving at least a portion of the control lever (37).

11. Adjusting system (1) according to claim 10,
**characterized in**
the recess (42) being configured as part of a first control ramp (40) for guiding the control lever (37).

12. Adjusting system (1) according to claim 10 or 11,
**characterized in**
the recess (42) being configured in such a way, that the control lever (37) received therein leads at the same time to a releasing actuation of the safety catch (25).

13. Adjusting system (1) according to claim 11 or 12,
**characterized in**
the safety catch (25) being guided in a pocket-like receptacle formed by a first (23) and a second wall surface (24), wherein the round web (30) is mounted in such a way as to connect the first and the second wall surface (23, 24), wherein the round recess (32) in the rolling bearing (29) is arranged between the first and the second wall surface (23, 24), and wherin the first control ramp (40) is formed by the upper edge of a wall surface.

14. Adjusting system (1) according to one of the previous claims,
**characterized in**
the memory module (15, 15') having a second control ramp (44) for guiding a movable seat-mounted comfort lever (72), said second control ramp (44) being configured in such a way that the comfort lever (72) releases the catch of the backrest when folded forward as it ascends onto the second control ramp (44).

15. Adjusting system (1) according to claim 14,
**characterized in**
the second control ramp (44) being formed integrally with or abuts the wall surface forming the first control ramp (40).

16. Adjusting system (1) according to claim 14 or 15,
**characterized in**
the second control ramp (44) being formed by the upper edge of a movable rocker (84) which is stationarily articulated by means of a first pivot joint (87) of the memory module (25), and which is connected to the movable safety catch (25) with its free end via a second pivot joint (91).

17. Adjusting system (1) according to claim 16
**characterized in**
the second pivot joint (91) being arranged at a flat end of the rocker (84) with the second control ramp (44) rising.

18. Adjusting system (1) according to claim 16 or 17,
**characterized in**
the rocker (84) abutting a wall surface via the first pivot joint (87) so as to be able to rotate, and the rocker (84) being connected to the safety catch (25) via the second pivot joint (91) through a circular arc shaped opening (90) in the wall surface.

## Revendications

1. Système de déplacement (1) pour un siège de véhicule (2), comprenant un rail inférieur (7) susceptible d'être monté solidairement sur le véhicule, un rail supérieur (8) déplaçable le long du rail inférieur (7) et susceptible d'être monté solidairement sur le siège, et comprenant un groupe structurel à mémoire (15, 15') déplaçable le long du rail inférieur (7) et alternativement solidaire du siège ou du véhicule, qui comprend un verrou de blocage mobile (25) pour réaliser un blocage à coopération de formes avec le rail inférieur (7) et des moyens pour réaliser un blocage à coopération de formes avec un levier de commande mobile (37) solidaire du siège, dans lequel le verrou de blocage (25) peut être actionné par le levier de commande (37) solidaire du siège,
**caractérisé en ce que**
le verrou de blocage (25) dans le groupe structurel à mémoire (15, 15') est monté mobile en rotation dans un palier à roulements (29) sous la commande d'une came, ledit palier à roulements (29) étant formé par un tenon de palier apparié en coopération de forces avec un coussinet ouvert.

2. Système de déplacement (1) selon la revendication 1,
**caractérisé en ce qu'**un palier (28) est employé à titre de commande à came.

3. Système de déplacement (1) selon la revendication 2,
**caractérisé en ce que** le palier (28) est formé par une barrette arrondie (30) contre laquelle se déplace le verrou de blocage (25) avec une arête de déplacement (31).

4. Système de déplacement (1) selon la revendication 2 ou 3,
**caractérisé en ce que** le verrou de blocage (25) est guidé entre le palier à roulements (29) et le palier (28).

5. Système de déplacement (1) selon l'une des revendications précédentes,
**caractérisé en ce que** le palier à roulements (29) est formé par un évidement arrondi (32) détourné du rail inférieur (7), dans lequel est logé le verrou de blocage (25) au moyen d'une dent conformée (34).

6. Système de déplacement (1) selon la revendication 5,
**caractérisé en ce que** l'évidement arrondi (32) est réalisé sensiblement en forme de U ou de V.

7. Système de déplacement (1) selon l'une des revendications précédentes,
**caractérisé en ce que** le rail inférieur (7) comporte des ouvertures (19) séparées les unes des autres par des barrettes (17) et dans lesquelles le verrou de blocage (25) s'engage dans une première position de blocage.

8. Système de déplacement (1) selon la revendication 7,
**caractérisé en ce que** le verrou de blocage (25) comporte un creux (48) agencé entre des ergots de blocage (46, 47), le creux venant coiffer une barrette (17) du rail inférieur (7) dans une seconde position de blocage.

9. Système de déplacement (1) selon l'une des revendications 3 à 8,
**caractérisé en ce que** l'arête de déplacement (31) du verrou de blocage (25) comporte un premier évidement (50) pour le soutien par rapport à la barrette arrondie (30) dans une position de libération, et un second évidement (53) écarté du premier évidement (50) par un bourrelet (52), pour le soutien par rapport à la barrette arrondie (30) dans la première position de blocage.

10. Système de déplacement (1) selon l'une des revendications précédentes,
**caractérisé en ce que** le groupe structurel à mémoire (15, 15') comprend, à titre de moyens pour réaliser un blocage à coopération de formes avec le levier de commande, un évidement (42) pour la réception d'au moins une partie du levier de commande (37).

11. Système de déplacement (1) selon la revendication 10,
**caractérisé en ce que** l'évidement (42) est réalisé en tant que partie d'une première rampe de commande (40) pour le guidage du levier de commande (37).

12. Système de déplacement (1) selon la revendication 10 ou 11,
**caractérisé en ce que** l'évidement (42) est réalisé de telle façon que le levier de commande (37) reçu dans celui-ci mène simultanément à un actionnement de libération du verrou de blocage (25).

13. Système de déplacement (1) selon la revendication 11 ou 12,
**caractérisé en ce que** le verrou de blocage (25) est guidé dans une réception en forme de poche formée par une première surface de paroi (23) et par une seconde surface de paroi (24), dans lequel la barrette arrondie (30) est monté de façon à relier la première et la seconde surface de paroi (23, 24), dans lequel l'évidement arrondi (32) du palier à roulement (29) est agencé entre la première et la seconde surface de paroi (23, 24), et dans lequel la première rampe de commande (40) est formée par l'arête supérieure d'une surface de paroi.

14. Système de déplacement (1) selon l'une des revendications précédentes,
**caractérisé en ce que** le groupe structurel à mémoire (15, 15') comprend une seconde rampe de commande (44) pour le guidage d'un levier de confort mobile (72) solidaire du siège, qui est réalisé de telle façon que, lorsqu'il monte sur la seconde rampe de commande (44), le levier de confort (72) libère un arrêt du dossier de siège (4) dans un état rabattu vers l'avant.

15. Système de déplacement (1) selon la revendication 14,
**caractérisé en ce que** la seconde rampe de commande (44) est conformée ou en appui sur la surface de paroi qui forme la première rampe de commande (40).

16. Système de déplacement (1) selon la revendication 14 ou 15,
**caractérisé en ce que** la seconde rampe de commande (44) est formée par l'arête supérieure d'une bascule mobile (84), laquelle est articulée de façon stationnaire au moyen d'une première articulation de rotation (87) du groupe structurel à mémoire (25), et est reliée par son extrémité libre au verrou de blocage mobile (25) via une seconde articulation de rotation (91).

17. Système de déplacement (1) selon la revendication 16,
**caractérisé en ce que** la seconde articulation de rotation (91) est agencée à une extrémité plane de la bascule (84) avec la seconde rampe de commande ascendante (44).

18. Système de déplacement (1) selon la revendication 16 ou 17,
**caractérisé en ce que** la bascule (84) est en appui contre une surface de paroi avec possibilité de rotation au moyen d'une première articulation de rotation (87), et **en ce que** la bascule (84) est reliée au verrou de blocage (25) via la seconde articulation de rotation (91) à travers une ouverture (90) en arc de cercle dans la surface de paroi.
